# EUROPÄISCHE PATENTSCHRIFT

(11) **EP 0 876 556 B1**
(45) Veröffentlichungstag und Bekanntmachung des Hinweises auf die Patenterteilung: **09.05.2001**
(21) Anmeldenummer: 97938888.1
(22) Anmeldetag: 08.08.1997
(51) Int. Cl.: F16B 39/10

(54) **RINGFÖRMIGES SICHERUNGSELEMENT**
RING-SHAPED SAFETY ELEMENT
ELEMENT DE BLOCAGE ANNULAIRE

(30) Priorität: 18.11.1996 DE 19647589
(43) Veröffentlichungstag der Anmeldung: 11.11.1998
(73) Patentinhaber: Faurecia Autositze GmbH & Co. KG, 31655 Stadthagen (DE)
(72) Erfinder: SUHLE, Karl, Georg, D-32429 Minden (DE)
(74) Vertreter: Thielking, Bodo, Dipl.-Ing.
(86) Internationale Anmeldenummer: EP9704321
(87) Internationale Veröffentlichungsnummer: WO9822723

(56) Entgegenhaltungen:
- DE-C- 10 907
- FR-A- 489 665
- FR-A- 2 594 910
- US-A- 2 887 891
- US-A- 5 022 875

## Beschreibung

### TECHNISCHES GEBIET

Die Erfindung betrifft ein ringförmiges Sicherungselement nach dem Oberbegriff des Anspruchs 1 (US 2 887 891-A).

### STAND DER TECHNIK

Ein bekanntes derartiges Sicherungselement ist als flache Scheibe mit einem außenliegenden, kreiszylindrischen Bereich ausgebildet, von dem aus sich Federzungen radial zum Zentrum erstrecken. Die mit Abstand zueinander angeordneten Federzungen lassen im Zentrum einen Durchmesserbereich frei, durch den eine passende, zu sichernde Welle geschoben werden kann. Ein solches, aus Federstahl gestanztes Sicherungselement ist für die Sicherungsaufgaben nur verwendbar, wenn der umgriffene Wellenbereich, der beispielsweise durch eine passende Durchgangsbohrung eines Gegenbereichs durchgeschoben ist, zum Aufbringen des bekannten Sicherungselements frei zugänglich ist.

Dabei muß grundsätzlich das Aufschieben des Sicherungselements von der Stirnseite der Welle her erfolgen.

### DIE ERFINDUNG

Ausgehend von diesem Stand der Technik liegt der Erfindung die Aufgabe zugrunde, ein Sicherungselement der als bekannt vorausgesetzten Art so auszubilden, daß es sowohl quer zur Längsachse eines wellenförmigen kreiszylindrischen Bereichs montierbar ist, als auch befestigbar, bevor der kreiszylindrische Bereich in seine Einbaulage gelangt.

Die Lösung dieser Aufgabe erfolgt mit den Merkmalen des Kennzeichnungsteils von Anspruch 1.

Bevorzugte Ausgestaltungen der Erfindung sind in den Unteransprüchen beschrieben.

Das ringförmige Sicherungselement wird von der Seite her auf einen kreiszylindrischen Bereich aufgeschoben und ist dann auf dem kreiszylindrischen Bereich fixiert. Die erste und zweite Anlagefläche des kreiszylindrischen Bereichs werden vorzugsweise durch die Stirnwände einer auf dem kreiszylindrischen Bereich umlaufenden Nut gebildet.

Die Nut ist üblicherweise so tief ausgebildet, daß der umlaufende kreiszylindrische Elementbereich allenfalls bündig mit den benachbarten kreiszylindrischen Bereichen liegt. Hierdurch wird es möglich, das seitlich aufgeschobene Sicherungselement durch eine passende Öffnung eines Gegenbereichs, beispielsweise durch eine passende Bohrung einer quer zur Zylinderachse sich erstreckenden Platte, zu schieben. Dabei werden die Federzungen beim Durchschieben einwärts gedrückt und federn nach dem Durchgang durch die Bohrung wieder radial nach außen.

Dabei ist es möglich, das Sicherungselement so anzuordnen, daß die angeformten Federzungen im wieder gespreizten Zustand nach dem Durchtritt durch die Öffnung fest an der Rückseite des Gegenbereichs, also beispielsweise an der Plattenrückseite, anliegen. Es ist aber auch möglich, daß die Federzungen eine axiale Beweglichkeit zwischen dem kreiszylindrischen Bereich und dem Gegenbereich weiterhin zulassen, so daß das Sicherungselement nicht zum Festlegen der Bereiche gegeneinander dient sondern nur als Auszugssicherung.

Das erfindungsgemäße Sicherungselement erlaubt nicht nur eine schnelle und unkomplizierte Montage, es erlaubt auch eine einfache Demontage der zusammenwirkenden Bereiche. Diese Demontage ist ohne Zerstörung des Sicherungselements durch dessen einfaches, seitlich erfolgendes Abziehen oder Abdrücken möglich.

### KURZBESCHREIBUNG DER ZEICHNUNGSABBILDUNG

Nachstehend wird eine bevorzugte Ausführungsform der Erfindung anhand der Zeichnung im einzelnen beschrieben.

In den unterschiedlichen Zeichnungen sind gleiche oder einander entsprechende Teile jeweils mit den gleichen Bezugszeichen versehen. Sie unterscheiden sich im Bedarfsfall lediglich durch Hochstriche voneinander.

### Es zeigen:

- Figur 1 -: eine perspektivische Ansicht einer ersten Ausführungsform des Sicherungselements,
- Figur 2 -: eine Seitenansicht des Sicherungselements gemäß Figur 1,
- Figur 3 -: eine Unteransicht des Sicherungselements gemäß Pfeil III in Figur 2,
- Figur 4 -: eine Seitenansicht einer Abwicklung des Sicherungselements gemäß Figur 1,

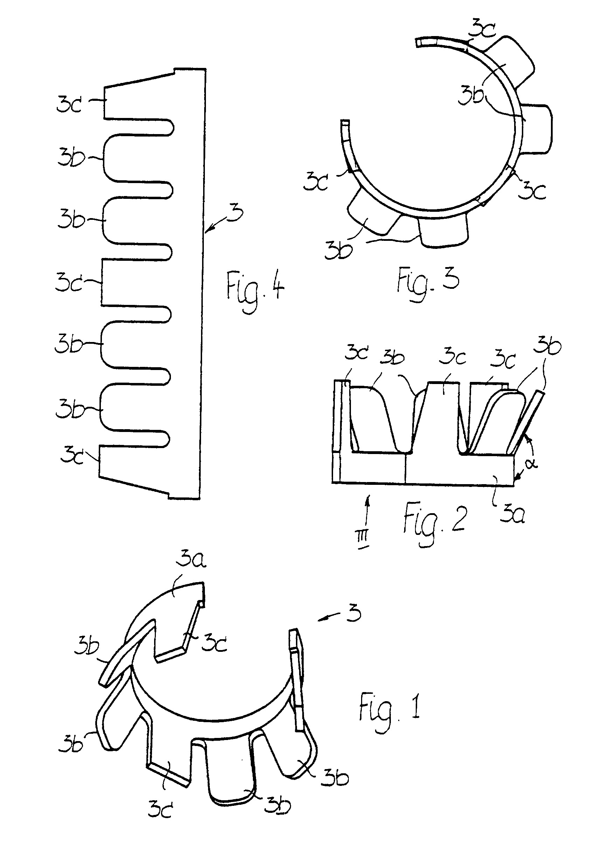

- Figur 1a -: eine Figur 1 entsprechende Darstellung einer zweiten Ausführungsform,

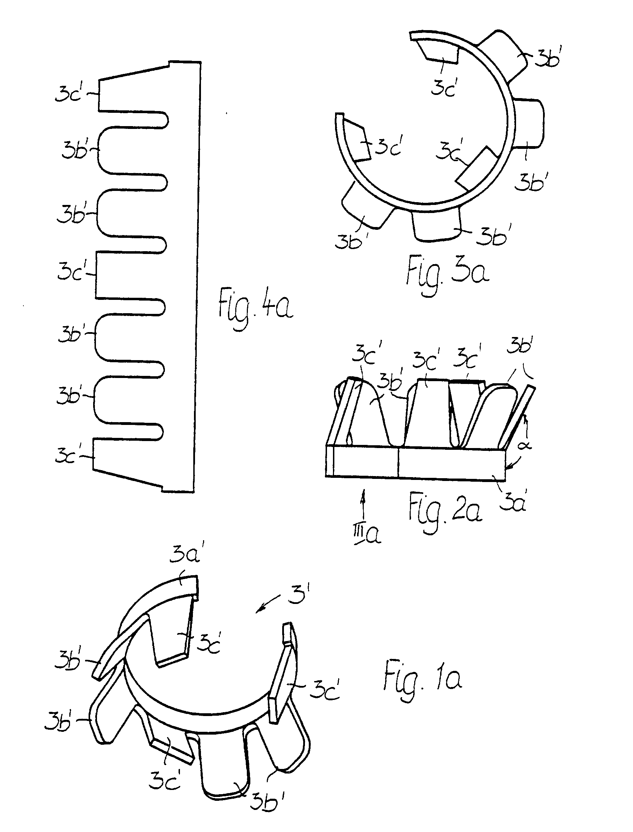

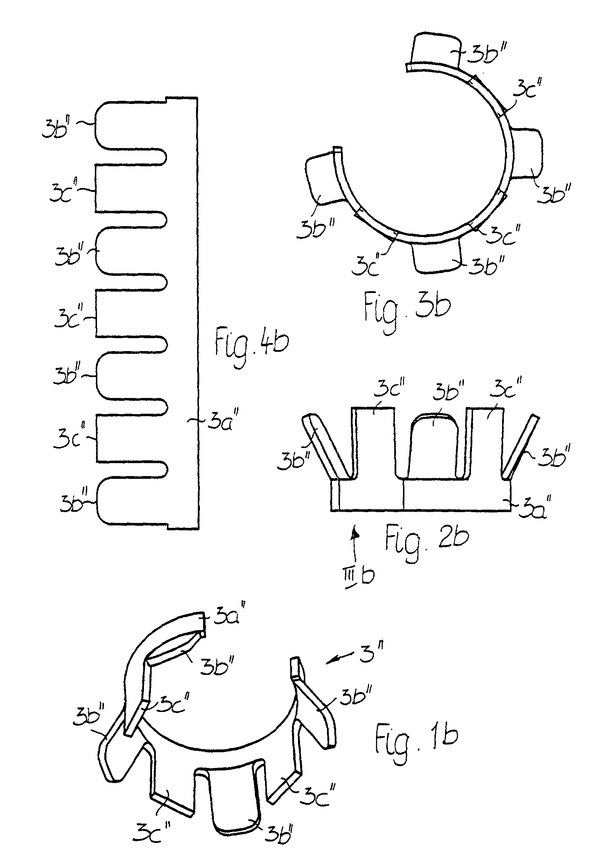

- Figur 2a -: eine Figur 2 entsprechende Darstellung einer zweiten Ausführungsform,
- Figur 3a -: eine Figur 3 entsprechende Darstellung einer zweiten Ausführungsform,
- Figur 4a -: eine Figur 4 entsprechende Darstellung einer zweiten Ausführungsform,
- Figur 1b -: eine Figur 1 entsprechende Darstellung einer dritten Ausführungsform,
- Figur 2b -: eine Figur 2 entsprechende Darstellung einer dritten Ausführungsform,
- Figur 3b -: eine Figur 3 entsprechende Darstellung einer dritten Ausführungsform,
- Figur 4b -: eine Figur 4 entsprechende Darstellung einer dritten Ausführungsform,

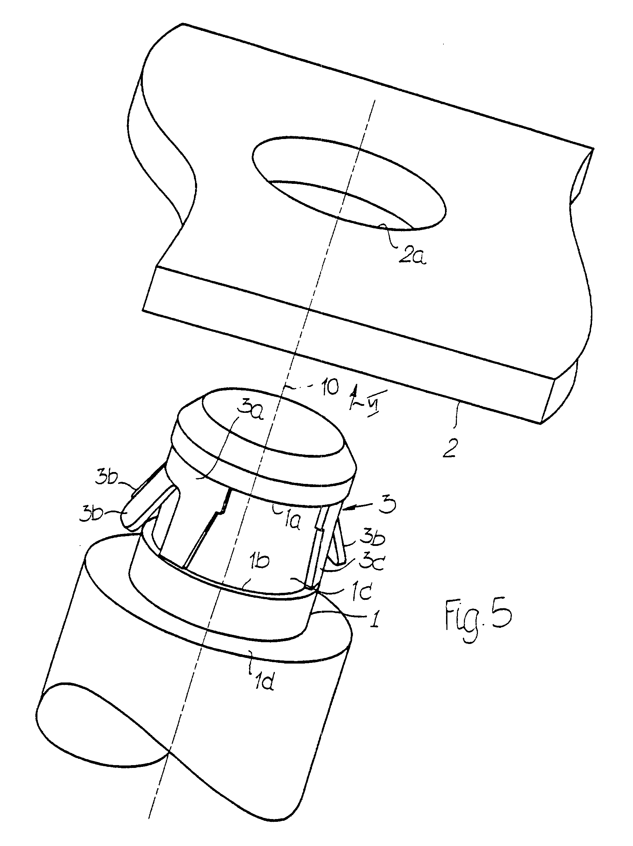

- Figur 5 -: eine perspektivische Explosionsdarstellung zweier zusammenzufügender Teile mit einem Sicherungsring gemäß Figur 1,

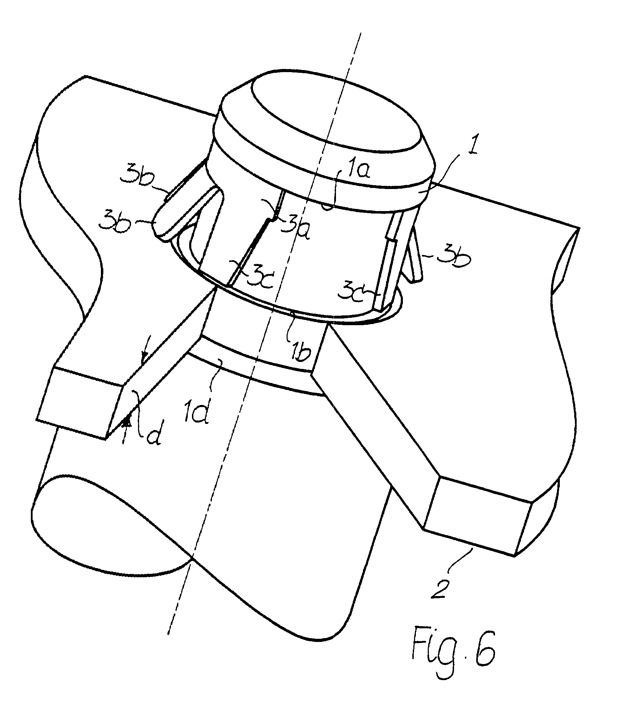

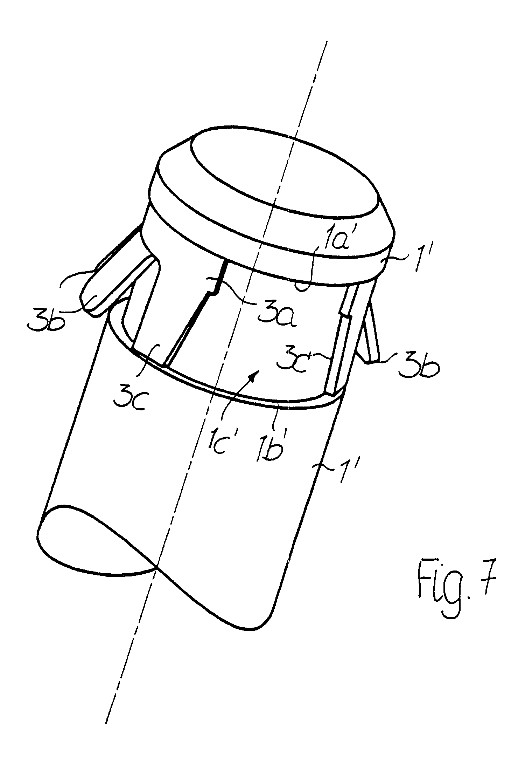

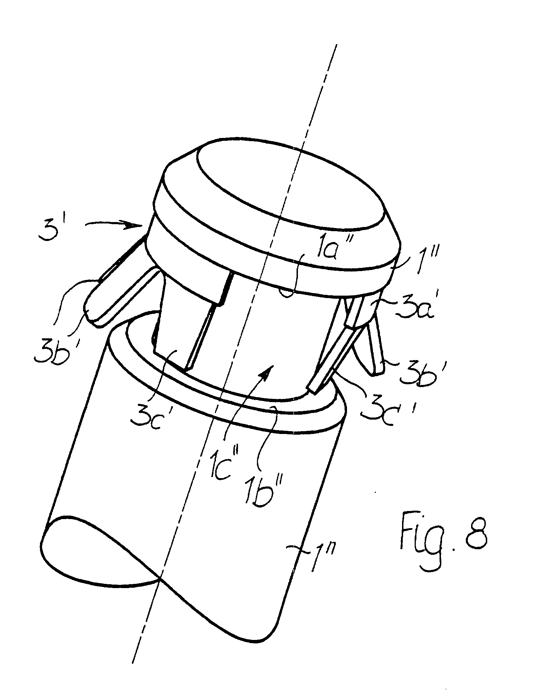

- Figur 6 -: die Anordnung gemäß Figur 5 in Montageposition, wobei zur Verdeutlichung der Einbaulage ein Segment des die Durchgangsbohrung aufweisenden plattenförmigen Gegenbereichs weggeschnitten dargestellt ist,

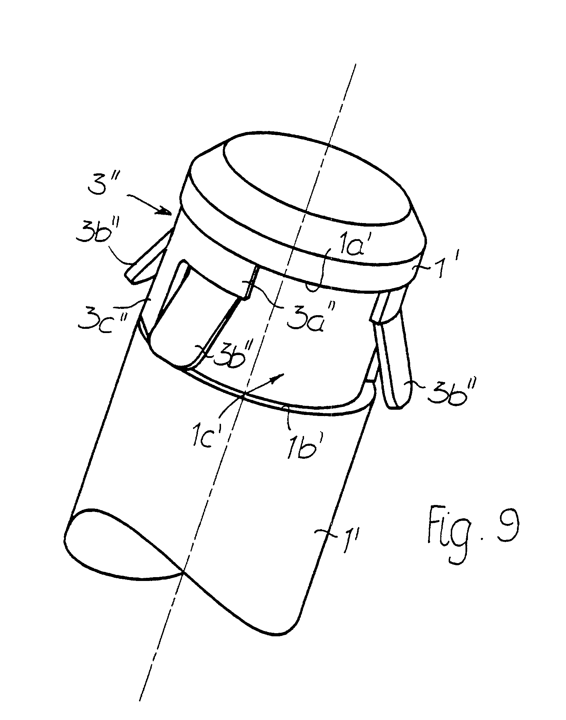

- Figur 7 -: die perspektivische Ansicht eines Wellenstummels mit einem Sicherungselement gemäß Figur 1,
- Figur 8 -: eine perspektivische Ansicht eines Wellenstummels mit einem Sicherungselement gemäß Figur 1a,
- Figur 9 -: die perspektivische Ansicht eines Wellenstummels mit einem Sicherungselement gemäß Figur 1b.

### BESTER WEG ZUR AUSFÜHRUNG DER ERFINDUNG

Die Beschreibung des ringförmigen Sicherungselements erfolgt zunächst anhand der Zeichnungsfiguren 1 bis 4:

Das insgesamt mit 3 bezeichnete Sicherungselement weist einen kreiszylindrischen Elementbereich 3a auf, der nicht vollständig umläuft, sondern dem zur Komplettierung eines vollständigen kreiszylindrischen Rings beispielsweise ein Viertel fehlt. Der umlaufende Elementbereich 3a ist also unterbrochen ausgebildet. Er weist mehrere Federzungen 3b auf, die unter einem stumpfen Winkel α radial auswärts abgebogen sind. Außerdem gehen von dem umlaufenden Elementbereich Abstützbereiche 3c ab, die als Zungen oder Laschen ausgebildet sind.

Im dargestellten Ausführungsbeispiel gemäß Figur 1 sind insgesamt drei als Zungen oder Laschen ausgebildete Abstützbereiche 3c vorgesehen und insgesamt vier Federzungen 3b.

Bei der Ausführungsform gemäß Figur 1 sind die als Zungen oder Laschen ausgebildeten Abstützbereiche 3c gegenüber dem umlaufenden Elementbereich 3a nicht abgebogen oder abgeknickt.

Die Ausführungsform gemäß Figuren la bis 4a unterscheidet sich von der ersten beschriebenen Ausführungsform lediglich dadurch, daß bei dieser Ausführungsform die ebenfalls als Zungen oder Laschen ausgebildeten Abstützbereiche 3c' zum Zentrum hin abgewinkelt oder abgebogen sind. Ansonsten ist die Ausbildung der insgesamt mit 3' bezeichneten zweiten Ausführungsform gleich.

Die Ausführungsform gemäß Figuren 1b bis 4b entspricht im wesentlichen der Ausführungsform gemäß Figuren 1 bis 4. Bei dem ringförmigen Sicherungselement 3" ist lediglich die Lage der als Zungen oder Laschen ausgebildeten Abstützbereiche 3c" und der Federzungen 3b" gegenüber der ersten Ausführungsform verändert.

In Figur 5 ist ein wellenförmiger, kreiszylindrischer Bereich 1 vorgesehen, der den abgesetzten Bereich eines Wellenstummels bildet. Der kreiszylindrische Bereich 1 weist eine umlaufende Nut 1c auf, welche Stirnwände aufweist, die als Anlageflächen 1a bzw. 1b für die passenden Bereiche des Sicherungselements 3 dienen. An der Anlagefläche 1a liegt die Stirnkante des Elementbereichs 3a an, an der Anlagefläche 1b liegen die Stirnflächen der als Laschen ausgebildeten Abstützbereiche 3c an. Der Einbau des Sicherungselements 3 erfolgt durch ein quer zur Symmetrieachse 10 erfolgendes Aufschieben des Sicherungselements auf den Boden der Nut 1c. Die Außenkontur des umlaufenden Elementbereichs 3a liegt ebenso wie die Außenkontur der Abstützbereiche 3c innerhalb der Außenkontur des kreiszylindrischen Bereichs 1.

Über die Außenkontur des kreiszylindrischen Bereichs ragen lediglich die nach außen abgespreizten Federzungen 3b vor.

Die Außenkontur des kreiszylindrischen Bereichs 1b entspricht dem Durchmesser 2a eines als Platte 2 ausgebildeten Gegenbereichs 2. Der kreiszylindrische Bereich 1 wird in Richtung des Pfeils VI gemäß Figur 5 duch die Bohrung 2a so weit verschoben, bis die Schulter 1d des Wellenstummels an der Unterseite von 2 anliegt. Der Abstand zwischen der Schulter ld und der Anlagefläche 1b für die Abstützbereiche 3c entspricht im dargestellten Ausführungsbeispiel annähernd der Dicke d des plattenförmigen Gegenbereichs 2. Der plattenförmige Gegenbereich 2 ist in seiner Position gemäß Figur 6 durch das Sicherungselement 3 in axialer Richtung unverschieblich auf dem Wellenstummel gesichert, weil die Federzungen 3b seitlich neben die Bohrung 2a greifen.

Figur 7 zeigt einen kreiszylindrischen Bereich 1', der als Wellenstummel ohne Absatz ausgebildet ist und nur eine Nut 1c mit den beiden Anlagenflächen 1a' und 1b' aufweist. In diese Nut 1c' ist das Sicherungselement 3 in der Weise eingebaut, wie dies bereits beschrieben wurde.

Eine Ausbildung gemäß Figur 7 dient nicht zum Festlegen eines nicht dargestellten Sicherungsbereichs, sondern nur als Auszugssicherung.

Figur 8 zeigt einen anderen, als Wellenstummel ohne Absatz ausgebildeten kreiszylindrischen Bereich 1" mit einer umlaufenden Nut 1c", die tiefer ist als die Nut 1c' gemäß Figur 7. In diese tiefere Nut ist das insgesamt mit 3' bezeichnete Sicherungselement eingesetzt, das in Figuren 1a bis 4a dargestellt ist. Die Abstützbereiche 3c' sind dabei radial einwärts gebogen und liegen an dem Grund der Nut 1c" an. Bei dieser Lösung ist also der umlaufende Elementbereich 3a' mit einem radialen Abstand von dem Grund der Nut 1c" angeordnet.

Figur 9 zeigt eine Lösung mit einem kreiszylindrischen Bereich 1", der dem kreiszylindrischen Bereich gemäß Figur 7 entspricht. Unterschiedlich gegenüber Figur 7 ist in Figur 9 lediglich die Ausbildung des Sicherungselements, das insgesamt mit 3" bezeichnet und in den Figuren 1b bis 4b dargestellt ist.

## Patentansprüche

1. Ringförmiges Sicherungselement (3; 3'; 3") zum Festlegen eines umgriffenen, wellenförmigen, kreiszylindrischen Bereichs (1; 1'; 1") in Einbaulage gegenüber einem Gegenbereich (2), mit von einem umlaufenden Elementbereich (3a; 3a'; 3a") radial sich erstreckenden, angeformten Federzungen (3b; 3b'; 3b"), die gegenüber dem umlaufenden Elementbereich unter einem Winkel (α) geneigt angeordnet sind,
dadurch gekennzeichnet,
daß der umlaufende Elementbereich (3a; 3a'; 3a") unterbrochen und zur Anlage an eine erste Anlagefläche (1a; 1a'; 1a") des kreiszylindrischen Bereichs (1; 1'; 1") ausgebildet ist, wobei die Federzungen (3b; 3b'; 3b") sich radial auswärts erstrecken und am umlaufenden Elementbereich weiterhin Abstützbereiche (3c; 3c'; 3c") angeformt sind, die sich an einer zweiten Anlagefläche (1b; 1b'; 1b") des kreiszylindrischen Bereichs (1; 1'; 1") abstützen.

2. Ringförmiges Sicherungselement nach Anspruch 1,
dadurch gekennzeichnet,
daß es derart zum Einbau in eine umlaufende Nut (1c; 1c'; 1c") des kreiszylindrischen Bereichs (1, 1'; 1") ausgebildet ist, daß der umlaufende Elementbereich (3a, 3a'; 3a") zur Anlage an die von der stirnseitigen ersten Nutwand gebildete erste Anlagefläche (1a; 1a'; 1a") und die Abstützbereiche (3c; 3c'; 3c") zur Anlage an die von der stirnseitigen zweiten Nutwand gebildete zweite Anlagefläche (1b; 1b'; 1b") ausgebildet sind.

3. Ringförmiges Sicherungselement nach Anspruch 1 oder 2,
dadurch gekennzeichnet,
daß der unterbrochen umlaufende Elementbereich (3a; 3a'; 3a") kreiszylindrisch ausgebildet ist.

4. Ringförmiges Sicherungselement nach einem oder mehreren der Ansprüche 1 bis 3,
dadurch gekennzeichnet,
daß die Abstützbereiche (3c; 3c'; 3c") als sich zumindest annähernd in Achsrichtung des kreiszylindrischen umlaufenden Elementbereichs (3a; 3a'; 3a") erstreckende Zungen ausgebildet sind.

5. Ringförmiges Sicherungselement nach einem oder mehreren der Ansprüche 1 bis 4,
dadurch gekennzeichnet,
daß die Abstützbereiche (3c; 3c'; 3c") angeformte Federzungen sind.

6. Ringförmiges Sicherungselement nach einem oder mehreren der Ansprüche 1 bis 5,
dadurch gekennzeichnet,
daß die als Federzungen ausgebildeten Abstützbereiche (3c') radial einwärts abgeknickt sind.

7. Ringförmiges Sicherungselement nach einem oder mehreren der Ansprüche 1 bis 6,
dadurch gekennzeichnet,
daß die Abstützbereiche (3c, 3c'; 3c") und die Federzungen (3b; 3b'; 3b") gleichmäßig über den umlaufenden Elementbereich (3a; 3a'; 3a") verteilt angeordnet sind.

8. Ringförmiges Sicherungselement nach einem oder mehreren der Ansprüche 1 bis 7,
dadurch gekennzeichnet,
daß an den einander benachbarten Enden des umlaufenden Elementbereichs (3a; 3a') Abstützbereiche (3c; 3c') angeordnet sind.

## Claims

1. Ring-like securing element (3, 3', 3") for securing an encompassed, shaft-like circular cylindrical area (1, 1', 1") in the installation position in relation to an opposing area (2), with spring tangs (3b, 3b', 3b'') extending radially from a circling element area (3a, 3a', 3a"), whereby these spring tangs (3b, 3b', 3b'') in relation to the circling element area are positioned in an inclined way at an angle (α)
characterised in that
the circling element area (3a, 3a', 3a") is formed in an interrupted way and for bearing on a first bearing surface (1a, 1a', 1a") of the circular cylindrical area (1, 1', 1''), whereby the spring tangs (3b, 3b', 3b") extend radially outwards and furthermore support areas (3c, 3c', 3c'') are formed on the circling element area, whereby these support areas (3c, 3c', 3c") rest on a second bearing surface (1b, 1b', 1b") of the circular cylindrical area (1, 1', 1").

2. Ring-like securing element according to Claim 1
characterised in that
it is formed for incorporation in a circling groove (1c, 1c', 1c") of the circular cylindrical area (1, 1', 1'') in such a way that the circling element area (3a, 3a', 3a'') is formed for bearing on the first bearing surface (1a, 1a', 1a") formed from the end side first groove wall and the support areas (3c, 3c', 3c") are formed for bearing on the second bearing surface (1b, 1b', 1b") formed from the end side second groove wall.

3. Ring-like securing element according to Claim 1 or 2
characterised in that
the interrupted circling element area (3a, 3a', 3a") is formed in a circular cylindrical way.

4. Ring-like securing element according to one or several of the Claims 1 to 3
characterised in that
the support areas (3c, 3c', 3c'') are formed as tongues extending at least approximately in the axial direction of the circular cylindrical circling element area (3a, 3a', 3a'').

5. Ring-like securing element according to one or several of the Claims 1 to 4
characterised in that
the support areas (3c, 3c', 3c") are formed spring tangs.

6. Ring-like securing element according to one or several of the Claims 1 to 5
characterised in that
the support areas (3c') formed as spring tangs are zigzagged radially inwards.

7. Ring-like securing element according to one or several of the Claims 1 to 6
characterised in that
the support areas (3c, 3c', 3c'') and the spring tangs (3b, 3b', 3b'') are distributed equally over the circling element area (3a, 3a', 3a").

8. Ring-like securing element according to one or several of the Claims 1 to 7
characterised in that
there are support areas (3c, 3c') positioned on the neighbouring ends of the circling element area (3a, 3a').

## Revendications

1. Elément de blocage annulaire (3; 3'; 3'') pour la fixation, en position de montage, d'un secteur cylindrique circulaire en forme d'arbre (1; 1'; 1") par rapport à un contre-secteur (2), avec des languettes flexibles (3b; 3b', 3b") faisant ressort, partant radialement d'un secteur continu (3a;3a'; 3a") et disposées, inclinées d'un angle (α) par rapport au secteur circulaire de l'élément annulaire,
caractérisé en ce que
le secteur (3a; 3a'; 3a'') de l'élément est interrompu et conçu pour venir porter contre une première surface de butée (1a; 1a',; 1a'') du secteur cylindrique circulaire (1; 1'; 1''), les languettes flexibles (3b; 3b'; 3b") s'étendant s'étendant radialement, vers l'extérieur et des secteurs d'appui (3c; 3c'; 3c"), formés d'une seule pièce à partir du secteur (3a; 3a'; 3a") de l'élément, venant porter contre une deuxième surface de butée (1b; 1b'; 1b'') du secteur cylindrique circulaire (1; 1'; 1'').

2. Elément de blocage annulaire selon la revendication 1,
caractérisé en ce que
celui-ci est conçu pour être monté dans une rainure continue (1c; 1c'; 1c'') du secteur cylindrique circulaire (1, 1', 1''),
que le secteur circulaire a") de l'élément est conçu pour venir porter contre une première surface de butée (1a; 1a'; 1a'') formée par la première paroi frontale de la rainure et que les secteur d'appui (3c; 3c'; 3c") sont conçus pour venir porter contre une deuxième surface de butée (1b; 1b'; 1b'') formée par la deuxième paroi frontale de la rainure.

3. Elément de blocage annulaire selon la revendication 1 ou 2,
caractérisé en ce que
le secteur interrompu (3a; 3a'; 3a") de l'élément est cylindrique circulaire.

4. Elément de blocage annulaire selon une ou plusieurs revendications 1 à 3,
caractérisé en ce que
les secteurs d'appui (3c; 3c'; 3c") sont conçus en forme de languettes s'étendant, au moins approximativement, dans le sens axial du secteur cylindrique circulaire (3a; 3a'; 3a'').

5. Elément de blocage annulaire selon une ou plusieurs revendications 1 à 4,
caractérisé en ce que
les secteurs d'appui (3c; 3c'; 3c'') sont des languettes flexibles faisant ressort, formées d'une pièce .

6. Elément de blocage annulaire selon une ou plusieurs revendications 1 à 5,
caractérisé en ce que
les secteurs d'appui (3c') en forme de languettes sont pliées radialement vers l'intérieur.

7. Elément de blocage annulaire selon une ou plusieurs revendications 1 à 6,
caractérisé en ce que
les secteurs d'appui (3c; 3c'; 3c") et les languettes flexibles (3b; 3b'; 3b'') sont répartis régulièrement sur le secteur circulaire (3a; 3a'; 3a'') de l'élément.

8. Elément de blocage annulaire selon une ou plusieurs revendications 1 à 7,
caractérisé en ce que
des secteurs d'appui (3c; 3c') sont disposés aux extrémités voisines du secteur circulaire (3a; 3a') de l'élément.
